# EUROPEAN PATENT APPLICATION

(11) **EP 3 836 645 A1**
(43) Date of publication of application: **16.06.2021**
(21) Application number: 18930316.7
(22) Date of filing: 16.08.2018
(51) Int. Cl.: H04W 52/14

(54) **UPLINK SIGNAL TRANSMISSION METHOD, TERMINAL AND STORAGE MEDIUM**

(71) Applicant: GUANGDONG OPPO MOBILE TELECOMMUNICATIONS CORP., LTD., Dongguan Guangdong 523860 (CN)
(72) Inventor: CHEN, Wenhong, Dongguan, Guangdong 523860 (CN); SHI, Zhihua, Dongguan, Guangdong 523860 (CN)
(74) Representative: Manitz Finsterwald Patent- und Rechtsanwaltspartnerschaft mbB
(86) International application number: PCT/CN2018/100893
(87) International publication number: WO 2020/034163

(57) **Abstract**

Provided in the embodiments are an uplink signal transmission method, a terminal and a storage medium. The method includes: a terminal receives associated reference signals configured by a network device respectively for two uplink signals to be transmitted; and when the reference signals respectively associated with the two uplink signals to be transmitted meet a preset condition, the terminal simultaneously sends the two uplink signals.

## Description

### TECHNICAL FIELD

The disclosure relates to the technical field of wireless communication, and particularly to an uplink signal transmission method, a terminal and a storage medium.

### BACKGROUND

In a New Radio (NR) system, when a terminal has only one panel, only one type of uplink signals can usually be sent simultaneously for reducing a peak-to-average ratio. However, when the terminal has multiple panels, different types of uplink signals can be sent through different panels. A present NR system does not support simultaneous transmission of different types of uplink signals in the same carrier.

### SUMMARY

Embodiments of the disclosure provide an uplink signal transmission method, a terminal and a computer-readable storage medium.

According to a first aspect, the embodiments of the disclosure provide a method for uplink signal transmission, which may include that: a terminal receives associated reference signals configured by a network device respectively for two uplink signals to be transmitted; and in response to the reference signals respectively associated with the two uplink signals to be transmitted meeting a preset condition, the terminal simultaneously sends the two uplink signals.

According to a second aspect, the embodiments of the disclosure also provide a terminal, which may include a communication unit, configured to receive associated reference signals configured by a network device respectively for two uplink signals to be transmitted and further configured to, in response to the reference signals respectively associated with the two uplink signals to be transmitted meeting a preset condition, simultaneously send the two uplink signals.

According to a third aspect, the embodiments of the disclosure also provide a terminal, which may include a processor and a memory. The memory may be configured to store a computer program. The processor may be configured to call and run the computer program stored in the memory to execute the method for uplink signal transmission of the first aspect of the embodiments of the disclosure.

According to a fourth aspect, the embodiments of the disclosure also provide a chip, which may include a processor, configured to call and run a computer program in a memory to enable a device installed with the chip to execute the method for uplink signal transmission of the first aspect of the embodiments of the disclosure.

According to a fifth aspect, the embodiments of the disclosure also provide a computer-readable storage medium, which may be configured to store a computer program, the computer program enabling a computer to execute the method for uplink signal transmission of the first aspect of the embodiments of the disclosure.

According to a sixth aspect, the embodiments of the disclosure also provide a computer program, which may enable a computer to execute the method for uplink signal transmission of the first aspect of the embodiments of the disclosure.

Based no the technical solutions, a terminal may determine according to reference signals respectively associated with two uplink signals to be transmitted that the two uplink signals may be simultaneously transmitted through different panels, so that the terminal can simultaneously send two types of uplink signals (or multiple different types of uplink signals), thereby avoiding increase of a peak-to-average ratio and guaranteeing high transmission performance.

### BRIEF DESCRIPTION OF THE DRAWINGS

FIG. 1 is a schematic diagram of an architecture of a communication system according to an embodiment of the disclosure.
FIG. 2 is a flowchart of an uplink signal transmission method according to an embodiment of the disclosure.
FIG. 3 is a first composition structure diagram of a terminal according to an embodiment of the disclosure.
FIG. 4 is a second composition structure diagram of a terminal according to an embodiment of the disclosure.
FIG. 5 is a hardware composition structure diagram of a terminal according to an embodiment of the disclosure.
FIG. 6 is a schematic structure diagram of a chip according to another embodiment of the disclosure.

### DETAILED DESCRIPTION

The technical solutions in the embodiments of the disclosure will be described below in combination with the drawings in the embodiments of the disclosure. It is apparent that the described embodiments are not all embodiments but part of embodiments of the disclosure. All other embodiments obtained by those of ordinary skill in the art based on the embodiments in the application without creative work shall fall within the scope of protection of the disclosure.

The technical solutions of the embodiments of the disclosure may be applied to various communication systems, for example, a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system or a future 5th-Generation (5G) system.

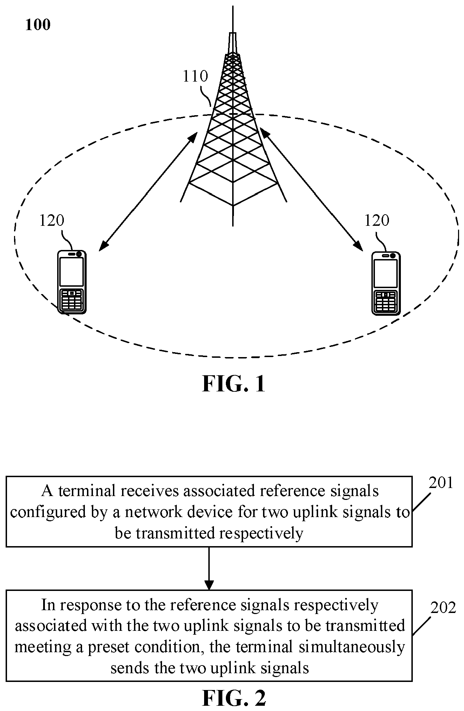

Exemplarily, a communication system 100 that the embodiments of the disclosure are applied to is shown in FIG. 1. The communication system 100 may include a network device 110. The network device 110 may be a device communicating with a terminal 120 (or called a communication terminal). The network device 110 may provide a communication coverage for a specific geographical region and may communicate with a terminal device located in the coverage. Optionally, the network device 110 may be a Base Transceiver Station (BTS) in the GSM or the CDMA system, or may also be a NodeB (NB) in the WCDMA system, or may also be an Evolutional Node B (eNB or eNodeB) in the LTE system or a wireless controller in a Cloud Radio Access Network (CRAN). Or the network device may be a mobile switching center, a relay station, an access point, a vehicle device, a wearable device, a hub, a switch, a network bridge, a router, a network-side device in a future 5G network, a network device in a future evolved Public Land Mobile Network (PLMN) or the like.

The communication system 100 may further include at least one terminal 120 under the coverage of the network device 110. The "terminal" used herein includes, but not limited to, a device configured to receive/send a communication signal through a wired line connection, for example, through Public Switched Telephone Network (PSTN), Digital Subscriber Line (DSL), digital cable and direct cable connections, and/or another data connection/network and/or through a wireless interface, for example, for a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter; and/or another terminal; and/or an Internet of Things (IoT) device. The terminal configured to communicate through a wireless interface may be called a "wireless communication terminal", a "wireless terminal" or a "mobile terminal." Examples of the mobile terminal include, but not limited to, a satellite or cellular telephone, a Personal Communication System (PCS) terminal capable of combining a cellular radio telephone and data processing, faxing and data communication capabilities, a Personal Digital Assistant (PDA) capable of including a radio telephone, a pager, Internet/intranet access, a Web browser, a notepad, a calendar and/or a Global Positioning System (GPS) receiver, and a conventional laptop and/or palmtop receiver or another electronic device including a radio telephone transceiver. The terminal may refer to an access terminal, User Equipment (UE), a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle device, a wearable device, a terminal device in the 5G network, a terminal device in the future evolved PLMN or the like.

Optionally, Device to Device (D2D) communication may be performed between the terminals 120.

Optionally, the 5G system or the 5G network may also be called an NR system or an NR network.

A network device and two terminals are exemplarily shown in FIG. 1. Optionally, the communication system 100 may include multiple network devices. Another number of terminals may be included under coverage of each network device. No limits are made thereto in the embodiments of the disclosure.

Optionally, the communication system 100 may further include another network entity such as a network controller and a mobility management entity. No limits are made thereto in the embodiments of the disclosure.

It is to be understood that terms "system" and "network" in the disclosure may usually be exchanged in the disclosure. In the disclosure, term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

The embodiments of the disclosure provide an uplink signal transmission method. FIG. 2 is a flowchart of an uplink signal transmission method according to an embodiment of the disclosure. As shown in FIG. 2, the method includes the following operations.

In operation 201, a terminal receives associated reference signals configured by a network device respectively for two uplink signals to be transmitted.

In operation 202, in response to the reference signals respectively associated with the two uplink signals to be transmitted meeting a preset condition, the terminal simultaneously sends the two uplink signals.

In the embodiment, the two uplink signals may be configured to be transmitted on the same time-domain resource. In an implementation mode, the two uplink signals are configured to be transmitted on the same Orthogonal Frequency Division Multiplexing (OFDM) symbols or configured to be transmitted in the same slot.

In the embodiment, each of the two uplink signals may be one of the following signals: a Sounding Reference Signal (SRS), a Physical Uplink Control Channel (PUCCH), a Physical Uplink Shared Channel (PUSCH), a Physical Uplink Control Channel Demodulation Reference Signal (PUCCH DMRS), a Physical Uplink Shared Channel Demodulation Reference Signal (PUSCH DMRS) and a Phase Tracking Reference Signal (PTRS).

In the embodiment, the reference signal associated with each of the two uplink signals may be one of the following signals: a Synchronization Signal Block (SSB), an uplink PTRS, an SRS and a Channel State Information-Reference Signal (CSI-RS). The reference signals respectively associated with the two uplink signals may be configured by the network device.

In the embodiment, descriptions are made based on whether the reference signals respectively associated with the two uplink signals meet the preset condition or not and specific implementation modes of transmission of the uplink signals by the terminal respectively.

In a first implementation mode, when the reference signals respectively associated with the two uplink signals are uplink PTRSs, the reference signals respectively associated with the two uplink signals to be transmitted meeting the preset condition may include that: ports of the uplink PTRSs respectively associated with the two uplink signals are different.

In an implementation mode, when the ports of the uplink PTRSs respectively associated with the two uplink signals are different, in this application scenario, the terminal may consider that the two uplink signals are required to be transmitted through different panels. In such case, if the network device configures the two uplink signals to be transmitted on the same time-domain resource, the terminal may simultaneously send the two uplink signals through different panels.

In the implementation mode, the method may further include that: when the ports of the uplink PTRSs respectively associated with the two uplink signals are the same, the terminal sends an uplink signal with a higher priority in the two uplink signals, or, the terminal does send neither of the two uplink signals.

Herein, when the ports of the uplink PTRSs respectively associated with the two uplink signals are the same, the terminal may consider that the two uplink signals can be transmitted through the same panel only. In such case, the terminal cannot simultaneously send the two uplink signals. If the network device configures the two uplink signals to be transmitted on the same time-domain resource, as an example, the terminal may determine an uplink signal with a higher priority from the two uplink signals according to a preset priority rule and only send the uplink signal with the higher priority, As another example, the terminal does send neither of the two uplink signals. For the second application scenario, if the network device configures the two uplink signals to be simultaneously transmitted, the terminal may process the present case as an error case and is not needed to send the two uplink signals according to a configuration of the network device.

In the implementation mode, the method may further include that: when a first uplink signal of the two uplink signals is a PUSCH or PUSCH DMRS scheduled by Downlink Control Information (DCI), the terminal determines a port of an uplink PTRS associated with the first uplink signal based on PTRS port indication information in the DCI, the first uplink signal being any one of the two uplink signals; and/or, when a second uplink signal of the two uplink signals is an uplink signal of other type than the PUSCH and PUSCH DMRS scheduled by the DCI, the terminal determines a port of an uplink PTRS associated with the second uplink signal based on a PTRS port corresponding to an SRS resource for an SRS that adopts a same beam as the second uplink signal. Herein, the network device may configure the SRS resource for the SRS that adopts a same beam as the second uplink signal and a PTRS port corresponding to each SRS resource in advance through high-layer signaling. The second uplink signal may be any one of the two uplink signals.

Herein, the beam is also called a spatial transmission filter. The SRS that adopts a same beam as the second uplink signal may also be called an SRS adopting the same spatial transmission filter as the second uplink signal.

In a second implementation mode, when the reference signals respectively associated with the two uplink signals are SRSs, the reference signals respectively associated with the two uplink signals to be transmitted meeting the preset condition may include that: SRS resources for the SRSs respectively associated with the two uplink signals belong to different SRS resource sets, or, SRS resources for the SRSs respectively associated with the two uplink signals correspond to different PTRS ports.

In an implementation mode, when the SRS resources for the SRSs respectively associated with the two uplink signals belong to different SRS resource sets, in this application scenario, the terminal may consider that the two uplink signals are required to be transmitted through different panels. In such case, if the network device configures the two uplink signals to be transmitted on the same time-domain resource, the terminal may simultaneously send the two uplink signals through different panels. As a second implementation mode, when the SRS resources for the SRSs respectively associated with the two uplink signals correspond to different PTRS ports, in this application scenario, the terminal may consider that the two uplink signals are required to be transmitted through different panels. In such case, if the network device configures the two uplink signals to be transmitted on the same time-domain resource, the terminal may simultaneously send the two uplink signals through different panels. Herein, the network device may configure a corresponding PTRS port for a SRS resource for each SRS in advance.

In the implementation mode, the method may further include that: when the SRS resources for the SRSs respectively associated with the two uplink signals belong to the same SRS resource set or when the SRS resources for the SRSs respectively associated with the two uplink signals correspond to the same PTRS port, the terminal sends the uplink signal with the higher priority in the two uplink signals, or, the terminal does send neither of the two uplink signals.

When the SRS resources for the SRSs respectively associated with the two uplink signals belong to the same SRS resource set or when the SRS resources for the SRSs respectively associated with the two uplink signals correspond to the same PTRS port, the terminal may consider that the two uplink signals can be transmitted through the same panel only. In such case, the terminal cannot simultaneously send the two uplink signals. If the network device configures the two uplink signals to be transmitted on the same time-domain resource, as an example, the terminal may determine the uplink signal with the higher priority in the two uplink signals according to the preset priority rule and only send the uplink signal with the higher priority. As another example, the terminal does send neither of the two uplink signals. In the second application scenario, if the network device configures the two uplink signals to be simultaneously transmitted, the terminal may process the present case as an error case and is not needed to send the two uplink signals according to the configuration of the network device.

In the implementation mode, the SRSs respectively associated with the two uplink signals are SRSs that adopt a same beam as respective uplink signals. Herein, the beam is also called a spatial transmission filter. The SRSs that adopt a same beam as the respective uplink signals may also be called SRSs adopting the same spatial transmission filter as the corresponding uplink signals.

In the implementation mode, the network device may configure the SRS resources for the SRSs adopting the same beams for the two uplink signals in advance through high-layer signaling respectively.

In the implementation mode, the method may further include that: when the first uplink signal of the two uplink signals is the PUSCH or PUSCH DMRS scheduled by the DCI, the terminal determines the SRS resource for the SRS associated with the first uplink signal based on SRS resource indication information in the DCI, the first uplink signal being any one of the two uplink signals; and when the second uplink signal of the two uplink signals is an uplink signal of other type than the PUSCH and PUSCH DMRS scheduled by the DCI, the terminal determines the SRS associated with the second uplink signal based on the SRS that adopts a same beam as the second uplink signal. Herein, the network device may configure the SRS resource for the SRS that adopts a same beam as the second uplink signal and a PTRS port corresponding to each SRS resource in advance through high-layer signaling. The second uplink signal may be any one of the two uplink signals.

In a third implementation mode, when the reference signals respectively associated with the two uplink signals are CSI-RSs, the reference signals respectively associated with the two uplink signals to be transmitted meeting the preset condition may include that: CSI-RS resources for the CSI-RSs respectively associated with the two uplink signals belong to different CSI-RS resource sets.

As an implementation mode, when the CSI-RS resources for the CSI-RSs respectively associated with the two uplink signals belong to different SRS resource sets, in this application scenario, the terminal may consider that the two uplink signals are needed to be transmitted through different panels. In such case, if the network device configures the two uplink signals to be transmitted on the same time-domain resource, the terminal may simultaneously send the two uplink signals through different panels.

In the implementation mode, the method may further include that: when the CSI-RS resources for the CSI-RSs respectively associated with the two uplink signals belong to the same CSI-RS resource set, the terminal sends the uplink signal with the higher priority in the at least two uplink signals, or, the terminal does send neither of the two uplink signals.

As an example, when the CSI-RS resources for the CSI-RSs respectively associated with the two uplink signals belong to the same CSI-RS resource set, the terminal may consider that the two uplink signals can be transmitted through the same panel only, and in such case, the terminal cannot simultaneously send the two uplink signals. If the network device configures the two uplink signals to be transmitted on the same time-domain resource, as an example, the terminal may determine the uplink signal with the higher priority from the two uplink signals according to the preset priority rule and only send the uplink signal with the higher priority; and as another example, the terminal does send neither of the two uplink signals. For the second application scenario, if the network device configures the two uplink signals to be simultaneously transmitted, the terminal may process the present case as an error case and is not needed to send the two uplink signals according to the configuration of the network device.

In the implementation mode, the terminal may obtain a CSI-RS resource for a CSI-RS associated with an uplink signal from spatial relation information configured by the network device for the uplink signal.

In a fourth implementation mode, when the reference signals respectively associated with the two uplink signals are SSBs, the reference signals respectively associated with the two uplink signals to be transmitted meeting the preset condition may include that: the SSBs respectively associated with the two uplink signals include different cell information.

As an implementation mode, when the SSBs respectively associated with the two uplink signals include different cell information, in this application scenario, the terminal may consider that the two uplink signals are needed to be transmitted through different panels. In such case, if the network device configures the two uplink signals to be transmitted on the same time-domain resource, the terminal may simultaneously send the two uplink signals through different panels. Herein, the cell information may include a cell Identifier (ID) or public system information of a cell.

In the implementation mode, the method may further include that: when the SSBs respectively associated with the two uplink signals include the same cell information, the terminal sends the uplink signal with a higher priority in the two uplink signals, or, the terminal does send neither of the two uplink signals.

When the SSBs respectively associated with the two uplink signals include the same cell information, the terminal may consider that the two uplink signals can be transmitted through the same panel only, and in such case, the terminal cannot simultaneously send the two uplink signals. If the network device configures the two uplink signals to be transmitted on the same time-domain resource, as an example, the terminal may determines the uplink signal with the higher priority from the two uplink signals according to the preset priority rule and only send the uplink signal with the higher priority; and as another example, the terminal does send neither of the two uplink signals. For the second application scenario, if the network device configures the two uplink signals to be simultaneously transmitted, the terminal may process the present case as an error case and is not needed to send the two uplink signals according to the configuration of the network device.

In the implementation mode, the terminal may obtain an SSB associated with an uplink signal from spatial relation information configured by the network device for the uplink signal.

It can be seen from the abovementioned implementation modes that the operation that the terminal receives the associated reference signals configured by the network device respectively for the two uplink signals to be transmitted may include that: the terminal determines each reference signal respectively associated with each of at least one uplink signal according to spatial relation information configured by the network device for the at least one uplink signal of the two uplink signals to be transmitted.

In an implementation mode of the disclosure, the operation that the terminal receives the associated reference signals configured by the network device respectively for the two uplink signals to be transmitted may include that: the terminal receives the associated reference signals configured by the network device respectively for the two uplink signals to be transmitted based on Radio Resource Control (RRC) signaling, Media Access Control (MAC) signaling or DCI.

As a first implementation mode, the operation that the terminal receives the associated reference signals configured by the network device respectively for the two uplink signals to be transmitted based on the RRC signaling, the MAC signaling or the DCI may include that: when a third uplink signal of the two uplink signals is a periodic signal, the terminal receives the associated reference signal configured by the network device for the third uplink signal based on the RRC signaling.

As a second implementation mode, the operation that the terminal receives the associated reference signals configured by the network device respectively for the two uplink signals to be transmitted based on the RRC signaling, the MAC signaling or the DCI may include that: when a fourth uplink signal of the two uplink signals is a quasi-persistent signal, the terminal receives the associated reference signal configured by the network device for the fourth uplink signal based on the MAC signaling.

As a third implementation mode, the operation that the terminal receives the associated reference signals configured by the network device respectively for the two uplink signals to be transmitted based on the RRC signaling, the MAC signaling or the DCI may include that: when a fifth uplink signal of the two uplink signals is an aperiodic signal, the terminal receives the associated reference signal configured by the network device for the fifth uplink signal based on the DCI.

In an implementation mode of the disclosure, the operation that the two uplink signals are simultaneously sent may include that: the terminal simultaneously sends the two uplink signals through different panels. During a practical application, the terminal may adopt independent beams to send the two uplink signals respectively.

With adoption of the technical solution of the embodiments of the disclosure, a terminal may determine based on reference signals respectively associated with two uplink signals to be transmitted that the two uplink signals may be simultaneously transmitted through different panels, so that the terminal can simultaneously send two different types of uplink signals (or multiple different types of uplink signals), thereby avoiding increase of a peak-to-average ratio and guaranteeing higher transmission performance.

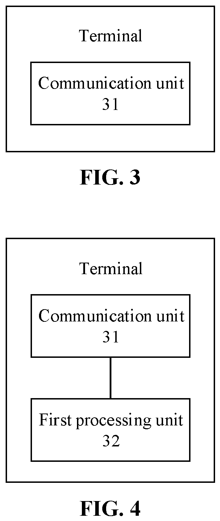

The embodiments of the disclosure also provide a terminal. FIG. 3 is a first composition structure diagram of a terminal according to an embodiment of the disclosure. As shown in FIG. 3, the terminal includes a communication unit 31, configured to receive associated reference signals configured by a network device respectively for two uplink signals to be transmitted and further configured to, in response to the reference signals respectively associated with the two uplink signals to be transmitted meeting a preset condition, simultaneously send the two uplink signals.

In the embodiment, the two uplink signals may be configured to be transmitted on the same time-domain resource.

In the embodiment, each of the two uplink signals may be one of following signals: an SSB, a PUCCH, a PUSCH, a PUCCH DMRS, a PUSCH DMRS and a PTRS.

In the embodiment, each reference signal respectively associated with each of the two uplink signals may be one of following signals: an SSB, a PTRS, an SRS and a CSI-RS.

As a first implementation mode, when the reference signals respectively associated with the two uplink signals are uplink PTRSs, the reference signals respectively associated with the two uplink signals to be transmitted meeting the preset condition may include that: ports of the uplink PTRSs respectively associated with the two uplink signals are different.

In the implementation mode, the communication unit 31 is further configured to, when ports of the uplink PTRSs respectively associated with the two uplink signals are the same, send an uplink signal with a higher priority in the two uplink signals or send neither of the two uplink signals.

In another embodiment, as shown in FIG. 4, the terminal may further include a first processing unit 32, configured to, when a first uplink signal of the two uplink signals is a PUSCH or PUSCH DMRS scheduled by DCI, determine a port of an uplink PTRS associated with the first uplink signal based on PTRS port indication information in the DCI, and/or, when a second uplink signal of the two uplink signals is an uplink signal of other type than the PUSCH and PUSCH DMRS scheduled by the DCI, determine a port of an uplink PTRS associated with the second uplink signal based on a PTRS port corresponding to an SRS resource for an SRS that adopts a same beam as the second uplink signal.

As a second implementation mode, when the reference signals respectively associated with the two uplink signals are SRSs, the reference signals respectively associated with the two uplink signals to be transmitted meeting the preset condition may include that: SRS resources for the SRSs respectively associated with the two uplink signals belong to different SRS resource sets, or, SRS resources for the SRSs respectively associated with the two uplink signals correspond to different PTRS ports.

In the implementation mode, the communication unit 31 is further configured to, when the SRS resources for the SRSs respectively associated with the two uplink signals belong to the same SRS resource set or when the SRS resources for the SRSs respectively associated with the two uplink signals correspond to the same PTRS port, send the uplink signal with the higher priority in the two uplink signals or send neither of the two uplink signals.

In the implementation mode, the SRSs respectively associated with the two uplink signals may be SRSs that adopt a same beam as respective uplink signals.

As a third implementation mode, when the reference signals respectively associated with the two uplink signals are CSI-RSs, the reference signals respectively associated with the two uplink signals to be transmitted meeting the preset condition may include that: CSI-RS resources for the CSI-RSs respectively associated with the two uplink signals belong to different CSI-RS resource sets.

In the implementation mode, the communication unit 31 is further configured to, when the CSI-RS resources for the CSI-RSs respectively associated with the two uplink signals belong to the same CSI-RS resource set, send the uplink signal with the higher priority in the two uplink signals or send neither of the two uplink signals.

As a fourth implementation mode, when the reference signals respectively associated with the two uplink signals are SSBs, the reference signals respectively associated with the two uplink signals to be transmitted meeting the preset condition may include that: the SSBs respectively associated with the two uplink signals include different cell information.

In the implementation mode, the communication unit 31 is further configured to, when the SSBs respectively associated with the two uplink signals include the same cell information, send the uplink signal with the higher priority in the two uplink signals or send neither of the two uplink signals.

In an implementation mode of the disclosure, the communication unit 31 is configured to determine each reference signal respectively associated with each of at least one uplink signal of the two uplink signals according to spatial relation information configured by the network device for the at least one uplink signal of the two uplink signals to be transmitted.

In an implementation mode of the disclosure, the communication unit 31 is configured to receive the associated reference signals configured by the network device respectively for the two uplink signals to be transmitted based on RRC signaling, MAC signaling or DCI.

Herein, the communication unit 31 is configured to, when a third uplink signal of the two uplink signals is a periodic signal, receive the associated reference signal configured by the network device for the third uplink signal based on the RRC signaling; when a fourth uplink signal of the two uplink signals is a quasi-persistent signal, receive the associated reference signal configured by the network device for the fourth uplink signal based on the MAC signaling; and when a fifth uplink signal of the two uplink signals is an aperiodic signal, receive the associated reference signal configured by the network device for the fifth uplink signal based on the DCI.

In an implementation mode of the disclosure, the communication unit 31 is configured to simultaneously send the two uplink signals through different panels.

It is to be noted that the terminal provided in the embodiments is described with division of each of the abovementioned program modules as an example during uplink signal transmission. In the practical application, such processing may be allocated to different program modules for completion as required, namely an internal structure of the terminal may be divided into different program modules to complete all or part of abovementioned processing. In addition, the terminal provided in the embodiments belongs to the same concept of the uplink signal transmission embodiment and details about a specific implementation process thereof refer to the method embodiment and will not be elaborated herein.

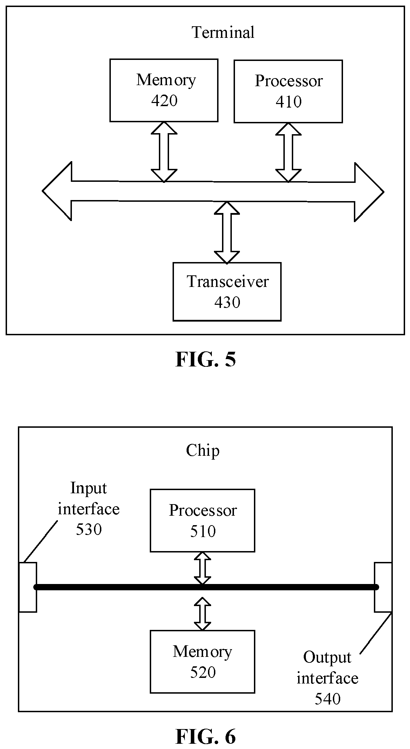

FIG. 5 is a schematic structure diagram of a hardware composition of a terminal according to an embodiment of the disclosure. The terminal 700 shown in FIG. 5 includes a processor 410, and the processor 410 may call and run a computer program in a memory to implement the method in the embodiments of the disclosure.

Optionally, as shown in FIG. 5, the terminal may further include the memory 420. The processor 410 may call and run the computer program in the memory 420 to implement the method in the embodiments of the disclosure.

The memory 420 may be an independent device independent of the processor 410 or may also be integrated into the processor 410.

Optionally, as shown in FIG. 5, the terminal may further include a transceiver 430. The processor 410 may control the transceiver 430 to communicate with another device, specifically sending information or data to another device or receiving information or data from another device.

The transceiver 430 may include a transmitter and a receiver. The transceiver 430 may further include antennae, and the number of the antennae may be one or more.

FIG. 6 is a schematic structure diagram of a chip according to another embodiment of the disclosure. The chip shown in FIG. 6 includes a processor 510, and the processor 510 may call and run a computer program in a memory to implement the method in the embodiments of the disclosure.

Optionally, as shown in FIG. 6, the chip may further include the memory 520. The processor 510 may call and run the computer program in the memory 520 to implement the method in the embodiments of the disclosure.

The memory 520 may be an independent device independent of the processor 510 or may also be integrated into the processor 510.

Optionally, the chip may further include an input interface 530. The processor 510 may control the input interface 530 to communicate with another device or chip, specifically acquiring information or data from the another device or chip.

Optionally, the chip may further include an output interface 540. The processor 510 may control the output interface 540 to communicate with another device or chip, specifically outputting information or data from another device or chip.

It is to be understood that the chip mentioned in the embodiment of the disclosure may also be called a system-level chip, a system chip, a chip system or a system on chip, etc.

It is to be understood that the processor in the embodiments of the disclosure may be an integrated circuit chip and has a signal processing capacity. In an implementation process, each operation of the method embodiments may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, operation and logical block diagram disclosed in the embodiments of the disclosure may be implemented or executed. The universal processor may be a microprocessor or the processor may also be any conventional processor and the like. The operations of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is arranged in a memory. The processor may read information in the memory, and complete the operations of the method in combination with hardware.

It can be understood that the memory in the embodiments of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

It is to be understood that the memory is exemplarily but unlimitedly described. For example, the memory in the embodiments of the disclosure may also be an SRAM, a DRAM, an SDRAM, a DDR SDRAM, an ESDRAM, an SLDRAM and a DR RAM That is, the memory in the embodiments of the disclosure is intended to include, but not limited to, memories of these and any other proper types.

The embodiments of the disclosure also provide a computer-readable storage medium, which is configured to store a computer program.

Optionally, the computer-readable storage medium may be applied to the terminal in the embodiments of the disclosure, and the computer program enables a computer to execute corresponding flows implemented by the terminal in each method of the embodiments of the disclosure. For simplicity, elaborations are omitted herein.

The embodiments of the disclosure also provide a computer program product, which includes a computer program instruction.

Optionally, the computer program product may be applied to a terminal in the embodiments of the disclosure, and the computer program instruction enables the computer to execute corresponding flows implemented by the terminal in each method of the embodiments of the disclosure. For simplicity, elaborations are omitted herein.

The embodiments of the disclosure also provide a computer program.

Optionally, the computer program may be applied to a terminal in the embodiments of the disclosure, and the computer program runs in the computer to enable the computer to execute corresponding flows implemented by the terminal in each method of the embodiments of the disclosure. For simplicity, elaborations are omitted herein.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. The described functions for each specific application may be implemented by different methods, but such implementation shall fall within the scope of the disclosure.

Those skilled in the art may clearly learn about that specific working processes of the system, devices and units described above may refer to the corresponding processes in the method embodiments and will not be elaborated herein for convenient and brief description.

In some embodiments provided by the application, it is to be understood that the disclosed device and method may be implemented in another manner. For example, the device embodiments described above are only schematic. For example, division of the units is only logic function division. Other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated. Parts displayed as units may or may not be physical units, and namely may be located in the same place, or may also be distributed to multiple network units. Part or all of the units may be selected to achieve the solutions of the embodiments according to a practical requirement.

In addition, each functional unit in each embodiment of the disclosure may be integrated into a processing unit. Each unit may also physically exist independently. Two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product. The computer software product may be stored in a storage medium, including a plurality of instructions configured to enable a computer device (which may be a personal computer, a server, a network device or the like) to execute all or part of the operations of the method in each embodiment of the disclosure. The abovementioned storage medium includes: various media capable of storing program codes such as a U disk, a mobile hard disk, a ROM, a RAM, a magnetic disk or an optical disk.

The above are only the specific implementation modes of the disclosure and not intended to limit the scope of protection of the disclosure. Any variations or replacements apparent to those skilled in the art within the technical scope disclosed by the application shall fall within the scope of protection of the disclosure. Therefore, the scope of protection of the disclosure shall be subject to the scope of protection of the claims.

## Claims

1. A method for uplink signal transmission, comprising:
receiving, by a terminal, associated reference signals configured by a network device respectively for two uplink signals to be transmitted; and
sending, by the terminal, the two uplink signals simultaneously in response to the reference signals respectively associated with the two uplink signals to be transmitted meeting a preset condition.

2. The method of claim 1, wherein the two uplink signals are configured to be transmitted on a same time-domain resource.

3. The method of claim 1, wherein each of the reference signals respectively associated with the two uplink signals is one of following signals: a Synchronization Signal Block (SSB), an uplink Phase Tracking Reference Signal (PTRS), a Sounding Reference Signal (SRS) and a Channel State Information-Reference Signal (CSI-RS).

4. The method of claim 3, wherein, when the reference signals respectively associated with the two uplink signals are uplink PTRSs, the reference signals respectively associated with the two uplink signals to be transmitted meeting the preset condition comprises:
ports of the uplink PTRSs respectively associated with the two uplink signals are different.

5. The method of claim 4, further comprising: when the ports of the uplink PTRSs respectively associated with the two uplink signals are same,
sending, by the terminal, an uplink signal with a higher priority in the two uplink signals; or,
sending, by the terminal, neither of the two uplink signals.

6. The method of claim 4 or 5, further comprising:
when a first uplink signal of the two uplink signals is a Physical Uplink Shared Channel (PUSCH) or Physical Uplink Shared Channel Demodulation Reference Signal (PUSCH DMRS) scheduled by Downlink Control Information (DCI), determining, by the terminal, a port of an uplink PTRS associated with the first uplink signal based on PTRS port indication information in the DCI; and/or,
when a second uplink signal of the two uplink signals is an uplink signal of other type than the PUSCH and PUSCH DMRS scheduled by the DCI, determining, by the terminal, a port of an uplink PTRS associated with the second uplink signal based on a PTRS port corresponding to an SRS resource for an SRS that adopts a same beam as the second uplink signal.

7. The method of claim 3, wherein, when the reference signals respectively associated with the two uplink signals are SRSs, the reference signals respectively associated with the two uplink signals to be transmitted meeting the preset condition comprises:
SRS resources for the SRSs respectively associated with the two uplink signals belong to different SRS resource sets; or,
SRS resources for the SRSs respectively associated with the two uplink signals correspond to different PTRS ports.

8. The method of claim 7, further comprising:
when the SRS resources for the SRSs respectively associated with the two uplink signals belong to a same SRS resource set or when the SRS resources for the SRSs respectively associated with the two uplink signals correspond to a same PTRS port, sending, by the terminal, an uplink signal with a higher priority in the two uplink signals, or, sending, by the terminal, neither of the two uplink signals.

9. The method of claim 7 or 8, wherein the SRSs respectively associated with the two uplink signals are SRSs adopting a same beam as respective uplink signals.

10. The method of claim 3, wherein, when the reference signals respectively associated with the two uplink signals are CSI-RSs, the reference signals respectively associated with the two uplink signals to be transmitted meeting the preset condition comprises:
CSI-RS resources for the CSI-RSs respectively associated with the two uplink signals belong to different CSI-RS resource sets.

11. The method of claim 10, further comprising:
when the CSI-RS resources for the CSI-RSs respectively associated with the two uplink signals belong to a same CSI-RS resource set, sending, by the terminal, an uplink signal with a higher priority in the at least two uplink signals, or, sending, by the terminal, neither of the two uplink signals.

12. The method of claim 3, wherein, when the reference signals respectively associated with the two uplink signals are SSBs, the reference signals respectively associated with the two uplink signals to be transmitted meeting the preset condition comprises:
the SSBs respectively associated with the two uplink signals include different cell information.

13. The method of claim 12, further comprising:
when the SSBs respectively associated with the two uplink signals include same cell information, sending, by the terminal, an uplink signal with a higher priority in the two uplink signals, or, sending, by the terminal, neither of the two uplink signals.

14. The method of claim 1, wherein receiving, by the terminal, the associated reference signals configured by the network device respectively for the two uplink signals to be transmitted comprises:
determining, by the terminal, each reference signal respectively associated with each of at least one uplink signal of the two uplink signals according to spatial relation information configured by the network device for the at least one uplink signal of the two uplink signals to be transmitted.

15. The method of claim 1, wherein receiving, by the terminal, the associated reference signals configured by the network device respectively for the two uplink signals to be transmitted comprises:
receiving, by the terminal, the associated reference signals configured by the network device respectively for the two uplink signals to be transmitted based on Radio Resource Control (RRC) signaling, Media Access Control (MAC) signaling or DCI.

16. The method of claim 15, wherein receiving, by the terminal, the associated reference signals configured by the network device respectively for the two uplink signals to be transmitted based on the RRC signaling, the MAC signaling or the DCI comprises:
when a third uplink signal of the two uplink signals is a periodic signal, receiving, by the terminal, the associated reference signal configured by the network device for the third uplink signal based on the RRC signaling;
when a fourth uplink signal of the two uplink signals is a quasi-persistent signal, receiving, by the terminal, the associated reference signal configured by the network device for the fourth uplink signal based on the MAC signaling; and
when a fifth uplink signal of the two uplink signals is an aperiodic signal, receiving, by the terminal, the associated reference signal configured by the network device for the fifth uplink signal based on the DCI.

17. The method of claim 1, wherein sending the two uplink signals simultaneously comprises:
sending, by the terminal, the two uplink signals simultaneously through different panels.

18. The method of any one of claims 1-17, wherein each of the two uplink signals is one of following signals: an SSB, a Physical Uplink Control Channel (PUCCH), a PUSCH, a Physical Uplink Control Channel Demodulation Reference Signal (PUCCH DMRS), a PUSCH DMRS and a PTRS.

19. A terminal, comprising a communication unit, configured to receive associated reference signals configured by a network device respectively for two uplink signals to be transmitted and further configured to, in response to the reference signals respectively associated with the two uplink signals to be transmitted meeting a preset condition, simultaneously send the two uplink signals.

20. The terminal of claim 19, wherein the two uplink signals are configured to be transmitted on a same time-domain resource.

21. The terminal of claim 19, wherein each of the reference signals respectively associated with the two uplink signals is one of following signals: a Synchronization Signal Block (SSB), a Phase Tracking Reference Signal (PTRS), a Sounding Reference Signal (SRS) and a Channel State Information-Reference Signal (CSI-RS).

22. The terminal of claim 21, wherein, when the reference signals respectively associated with the two uplink signals are both uplink PTRSs, the reference signals respectively associated with the two uplink signals to be transmitted meeting the preset condition comprises:
ports of the uplink PTRSs respectively associated with the two uplink signals are different.

23. The terminal of claim 22, wherein the communication unit is further configured to, when the ports of the uplink PTRSs respectively associated with the two uplink signals are same, send an uplink signal with a higher priority in the two uplink signals or send neither of the two uplink signals.

24. The terminal of claim 22 or 23, further comprising a first processing unit, configured to:
when a first uplink signal of the two uplink signals is a Physical Uplink Shared Channel (PUSCH) or Physical Uplink Shared Channel Demodulation Reference Signal (PUSCH DMRS) scheduled by Downlink Control Information (DCI), determine a port of an uplink PTRS associated with the first uplink signal based on PTRS port indication information in the DCI; and/or,
when a second uplink signal of the two uplink signals is an uplink signal of other type than the PUSCH and PUSCH DMRS scheduled by the DCI, determine a port of an uplink PTRS associated with the second uplink signal based on a PTRS port corresponding to an SRS resource for an SRS that adopts a same beam as the second uplink signal.

25. The terminal of claim 21, wherein, when the reference signals respectively associated with the two uplink signals are both SRSs, the reference signals respectively associated with the two uplink signals to be transmitted meeting the preset condition comprises that:
SRS resources for the SRSs respectively associated with the two uplink signals belong to different SRS resource sets; or,
SRS resources for the SRSs respectively associated with the two uplink signals correspond to different PTRS ports.

26. The terminal of claim 25, wherein the communication unit is further configured to, when the SRS resources for the SRSs respectively associated with the two uplink signals belong to a same SRS resource set or when the SRS resources for the SRSs respectively associated with the two uplink signals correspond to a same PTRS port, send an uplink signal with a higher priority in the two uplink signals or send neither of the two uplink signals.

27. The terminal of claim 25 or 26, wherein the SRSs respectively associated with the two uplink signals are SRSs adopting a same beam as respective uplink signals.

28. The terminal of claim 21, wherein, when the reference signals respectively associated with the two uplink signals are both CSI-RSs, the reference signals respectively associated with the two uplink signals to be transmitted meeting the preset condition comprises that:
CSI-RS resources for the CSI-RSs respectively associated with the two uplink signals belong to different CSI-RS resource sets.

29. The terminal of claim 28, wherein the communication unit is further configured to, when the CSI-RS resources for the CSI-RSs respectively associated with the two uplink signals belong to a same CSI-RS resource set, send an uplink signal with a higher priority in the at least two uplink signals or send neither of the two uplink signals.

30. The terminal of claim 21, wherein, when the reference signals respectively associated with the two uplink signals are SSBs, the reference signals respectively associated with the two uplink signals to be transmitted meeting the preset condition comprises that:
the SSs respectively associated with the two uplink signals include different cell information.

31. The terminal of claim 30, wherein the communication unit is further configured to, when the SSBs respectively associated with the two uplink signals include same cell information, send an uplink signal with a higher priority in the two uplink signals or send neither of the two uplink signals.

32. The terminal of claim 19, wherein the communication unit is configured to determine each reference signal respectively associated with each of at least one uplink signal of the two uplink signals according to spatial relation information configured by the network device for the at least one uplink signal of the two uplink signals to be transmitted.

33. The terminal of claim 19, wherein the communication unit is configured to receive the associated reference signals configured by the network device respectively for the two uplink signals to be transmitted based on Radio Resource Control (RRC) signaling, Media Access Control (MAC) signaling or DCI.

34. The terminal of claim 33, wherein the communication unit is configured to:
when a third uplink signal of the two uplink signals is a periodic signal, receive the associated reference signal configured by the network device for the third uplink signal based on the RRC signaling;
when a fourth uplink signal of the two uplink signals is a quasi-persistent signal, receive the associated reference signal configured by the network device for the fourth uplink signal based on the MAC signaling; and
when a fifth uplink signal of the two uplink signals is an aperiodic signal, receive the associated reference signal configured by the network device for the fifth uplink signal based on the DCI.

35. The terminal of claim 19, wherein the communication unit is configured to send the two uplink signals simultaneously through different panels.

36. The terminal of any one of claims 19-35, wherein each of the two uplink signals is one of following signals: an SSB, a Physical Uplink Control Channel (PUCCH), a PUSCH, a Physical Uplink Control Channel Demodulation Reference Signal (PUCCH DMRS), a PUSCH DMRS and a PTRS.

37. A terminal, comprising a processor and a memory, wherein the memory is configured to store a computer program, and the processor is configured to call and run the computer program stored in the memory to execute the method for uplink signal transmission according to any one of claims 1-18.

38. A chip, comprising a processor, configured to call and run a computer program in a memory to enable a device installed with the chip to execute the method for uplink signal transmission according to any one of claims 1-18.

39. A computer-readable storage medium, configured to store a computer program, the computer program enabling a computer to execute the method for uplink signal transmission according to any one of claims 1-18.

40. A computer program, enabling a computer to execute the method for uplink signal transmission according to any one of claims 1-18.
